# EUROPÄISCHE PATENTANMELDUNG

(11) **EP 3 010 117 A1**
(43) Veröffentlichungstag der Anmeldung: **20.04.2016**
(21) Anmeldenummer: 14188949.3
(22) Anmeldetag: 15.10.2014
(51) Int. Cl.: H02K 1/32, H02K 3/24

(54) **Rotorballen für eine rotierende elektrische Maschine**

(71) Anmelder: Siemens Aktiengesellschaft, 80333 München (DE)
(72) Erfinder: Jäkel, Christian, 47169 Duisburg (DE); Kowalski, Matthias, 45478 Mülheim an der Ruhr (DE); Mrkulic, Omer, 46539 Dinslaken (DE)

(57) **Zusammenfassung**

Die Erfindung betrifft einen Rotorballen für einen Rotor einer rotierenden elektrischen Maschine, aufweisend mehrere umfangsverteilt angeordnete, axial verlaufende Rotorzähne, zwischen denen axial verlaufende Aufnahmenuten zur Aufnahme von jeweils einem Leiterabschnitt einer Rotorwicklung des Rotors angeordnet sind, wobei an wenigstens einer radialen Seitenwand von wenigstens einem Rotorzahn wenigstens eine Nut angeordnet ist, die wenigstens einen axialen Nutabschnitt, der sich von einer Stirnseite des Rotorballens zumindest teilweise axial über einen vorgegebenen Teilabschnitt des Rotorballens erstreckt, und wenigstens einen kommunizierend mit dem axialen Nutabschnitt verbundenen radialen Nutabschnitt, der sich von dem axialen Nutabschnitt zumindest teilweise radial zu einer Außenmantelfläche des Rotorballens erstreckt, aufweist.

## Beschreibung

Die Erfindung betrifft einen Rotorballen für einen Rotor einer rotierenden elektrischen Maschine, aufweisend mehrere umfangsverteilt angeordnete, axial verlaufende Rotorzähne, zwischen denen axial verlaufende Aufnahmenuten zur Aufnahme von jeweils einem Leiterabschnitt einer Rotorwicklung des Rotors angeordnet sind.

Des Weiteren betrifft die Erfindung eine rotierende elektrische Maschine, insbesondere einen Turbogenerator, aufweisend einen Stator und einen Rotor mit wenigstens einem Rotorballen.

Eine rotierende elektrische Maschine umfasst einen Stator und einen drehbar gelagerten Rotor. Der Rotor kann einen Rotorballen mit axialen Aufnahmenuten aufweisen, in denen jeweils ein Leiterabschnitt einer Rotorwicklung des Rotors angeordnet ist. Die in den Aufnahmenuten angeordneten Leiterabschnitte sind stirnseitig außerhalb des Rotorballens über Querleiterabschnitte elektrisch leitend miteinander verbunden, die auf axial einander gegenüberliegenden Seiten des Rotorballens jeweils einen Rotorwickelkopf ausbilden.

Ein Rotorwickelkopf kann zu seiner mechanischen Abstützung zumindest teilweise mit einem weiteren Rotorbauteil, beispielsweise einer Rotorkappe, umschlossen sein. Hierdurch kann verhindert werden, dass sich der Rotorwickelkopf während eines Betriebs einer rotierenden elektrischen Maschine aufgrund von hierbei auf ihn einwirkenden Zentrifugalkräften verformt.

Um einen Rotorwickelkopf zu kühlen, ist es bekannt, Kühlkanäle in Rotorzähne eines Rotorballens einzubringen, die sich ausgehend von einem axialen Stirnende des Rotorballens zunächst axial erstrecken und dann radial nach außen abknicken, um ein in dem jeweiligen Kühlkanal strömendes Kühlfluid radial nach außen aus dem Rotorballen abführen zu können.

Aufgabe der Erfindung ist, eine effektivere Kühlung eines Wickelkopfes eines Rotors einer rotierenden elektrischen Maschine bereitzustellen.

Der erfindungsgemäße Rotorballen für einen Rotor einer rotierenden elektrischen Maschine umfasst mehrere umfangsverteilt angeordnete, axial verlaufende Rotorzähne, zwischen denen axial verlaufende Aufnahmenuten zur Aufnahme von jeweils einem Leiterabschnitt einer Rotorwicklung des Rotors angeordnet sind, wobei an wenigstens einer radialen Seitenwand von wenigstens einem Rotorzahn wenigstens eine Nut angeordnet ist, die wenigstens einen axialen Nutabschnitt, der sich von einer Stirnseite des Rotorballens zumindest teilweise axial über einen vorgegebenen Teilabschnitt des Rotorballens erstreckt, und wenigstens einen kommunizierend mit dem axialen Nutabschnitt verbundenen radialen Nutabschnitt, der sich von dem axialen Nutabschnitt zumindest teilweise radial zu einer Außenmantelfläche des Rotorballens erstreckt, aufweist.

Erfindungsgemäß wird an einem Rotorzahn statt einer herkömmlichen axialen und mittigen Zahnbohrung die Nut an der radialen Seitenfläche des Rotorzahns angeordnet, die mit einem Wandabschnitt einer radialen Seitenwand eines in der an die Nut angrenzenden Aufnahmenut angeordneten Leiterabschnitts bzw. einer daran angeordneten elektrischen Isolierung einen Kühlkanal zum Leiten eines Kühlfluids ausbildet. Es muss erfindungsgemäß also keine herkömmliche axiale Zahnbohrung mittig in einen im Betrieb einer rotierenden elektrischen Maschine mechanisch stark beanspruchten Bereich des Rotorzahns eingebracht werden, was mit einer mechanischen Schwächung des Rotorzahns und dadurch mit einer Einschränkung der möglichen Geometrie des Rotorzahns bzw. der dazu benachbart angeordneten Aufnahmenuten einhergehen würde. Die Einschränkung der möglichen Geometrie des Rotorzahns bzw. der dazu benachbart angeordneten Aufnahmenuten würde wiederum mit einer Einschränkung der Leistungsfähigkeit eines entsprechend ausgestatteten Rotors einhergehen. Zudem ist die Anordnung der Nut an der radialen Seitenfläche des Rotorzahns deutlich kostengünstiger und bezüglich einer Beschädigung des Rotorzahns bzw. des Rotorballens fertigungstechnisch weniger riskant.

Ein durch einen Kühlkanal, der aus der Nut und einem Abschnitt der radialen Seitenwand des in einer an die Nut angrenzenden Aufnahmenut angeordneten Leiterabschnitts gebildet ist, geführtes Kühlfluid kommt gemäß der Erfindung direkt mit dem Leiterabschnitt bzw. der daran angeordneten elektrischen Isolierung in Kontakt, wodurch eine effektivere Kühlung des Leiterabschnitts als bei Verwendung einer herkömmlichen axialen Zahnbohrung gegeben ist, bei der das Kühlfluid ausschließlich mit dem Rotorzahn in unmittelbaren Kontakt kommt und somit einen benachbarten Leiterabschnitt lediglich mittelbar kühlt.

Eine Strömung eines Kühlfluids durch die Nut bzw. einen damit ausgebildeten Kühlkanal wird durch auf das Kühlfluid in dem Kühlkanal im Betrieb einer entsprechend ausgestatteten rotierenden elektrischen Maschine einwirkende Zentrifugalkräfte erzeugt. Zusätzlich kann ein Gebläse vor- oder nachgeschaltet werden, um einen zur Kühlung eines Rotorwickelkopfes optimalen Volumenstrom des Kühlfluids durch die Nut bereitzustellen.

An der radialen Seitenwand des Rotorzahns können auch zwei oder mehrere entsprechende Nuten angeordnet sein. Die wenigstens eine Nut kann auch zwei oder mehrere axiale Nutabschnitte und/oder radiale Nutabschnitte aufweisen. Insbesondere können zwei oder mehrere radial beabstandet zueinander angeordnete axiale Nutabschnitte kommunizierend mit einem einzigen radialen Nutabschnitt verbunden sein. Alternativ kann ein einziger axialer Nutabschnitt kommunizierend mit zwei oder mehreren axial beabstandet zueinander angeordneten radialen Nutabschnitten verbunden sein. Es kann auch an beiden radialen Seitenflächen eines Rotorzahns jeweils wenigstens eine entsprechende Nut angeordnet sein. Zudem kann an einer oder beiden radialen Seitenwänden jedes Rotorzahns jeweils eine entsprechende Nut angeordnet sein, um eine maximale Kühlung eines Rotorwickelkopfes zu erreichen.

Der axiale Nutabschnitt kann winklig oder über eine Abrundung kommunizierend mit dem radialen Nutabschnitt verbunden sein. Letzteres geht mit einem geringeren Strömungswiderstand der Nut einher, was einen größeren Volumenstrom des Kühlfluids durch die Nut bzw. einen damit ausgebildeten Kühlkanal ermöglicht, was wiederum eine effektivere Kühlung eines Rotorwickelkopfes möglich macht.

Die rotierende elektrische Maschine kann beispielsweise ein Turbogenerator sein.

Der vorgegebene Teilabschnitt des Rotorballens ist bevorzugt kürzer als eine Hälfte einer axialen Länge des Rotorballens ausgebildet. Hierdurch kann ein Kühlfluid, welches bereits Wärme bei der Kühlung eines dem Rotorballen stirnseitig vorgelagerten Wickelkopfes aufgenommen hat, aus dem Rotorballen abgeführt werden. Dadurch kann verhindert werden, dass die von dem Kühlfluid aufgenommene Wärme nachteilig in den Rotorballen und die daran angeordneten Leiterabschnitte eingeleitet wird. Zudem ist die Kühlwirkung eines entsprechend aufgewärmten Kühlfluids bezüglich einer Kühlung des Rotorballens und der an diesem angeordneten Leiterabschnitte sehr begrenzt, was eine Anordnung der Nut an einem Teilabschnitt des Rotorballens, der länger als die Hälfte der axialen Länge des Rotorballens ist, unnötig macht. Der vorgegebene Teilabschnitt des Rotorballens, an dem die Nut angeordnet ist, kann kürzer als ein Drittel, ein Viertel oder ein Fünftel der axialen Länge des Rotorballens oder noch kürzer ausgebildet sein.

Bevorzugt ist die Nut an einer radial äußeren Wandhälfte der radialen Seitenwand des Rotorzahns angeordnet. Hierdurch kann das in die Nut bzw. einen damit gebildeten Kühlkanal an einer Stirnseite des Rotorballens einströmende Kühlfluid entlang der in diesem radial äußeren Bereich angeordneten Leiterabschnitte eines dem Rotorballen stirnseitig vorgelagerten Wickelkopfes geleitet werden, um den Wickelkopf optimal kühlen zu können. Die Nut kann an einem radial äußeren Drittel der Seitenwand des Rotorzahns oder noch weiter radial außen angeordnet sein.

Die Nut ist bevorzugt im Querschnitt zumindest teilweise kreissegmentförmig ausgebildet. Dies geht im Vergleich mit einem polygonalen Querschnitt der Nut mit geringeren Verwirbelungen eines durch die Nut bzw. einen damit ausgebildeten Kühlkanal strömenden Kühlfluids und somit mit einem geringeren Strömungswiderstand der Nut einher. Hierdurch kann ein größerer Volumenstrom des Kühlfluids durch die Nut bzw. den damit ausgebildeten Kühlkanal strömen, was eine effektivere Kühlung eines Rotorwickelkopfes ermöglicht. Es können der axiale Nutabschnitt und/oder der radiale Nutabschnitt im Querschnitt zumindest teilweise kreissegmentförmig ausgebildet sein. Alternativ kann die Nut im Querschnitt zumindest teilweise halbkreisförmig, anderweitig abgerundet oder polygonal ausgebildet sein.

Bevorzugt verläuft wenigstens ein Nutabschnitt geradlinig. Auch diese Ausgestaltung geht mit einer Verringerung des Strömungswiderstands der Nut einher, wodurch ein größerer Volumenstrom des Kühlfluids durch die Nut bzw. einen damit ausgebildeten Kühlkanal strömen kann, was eine effektivere Kühlung eines Rotorwickelkopfes ermöglicht. Es können auch sowohl der axiale als auch der radiale Nutabschnitt geradlinig verlaufen.

Die erfindungsgemäße rotierende elektrische Maschine, insbesondere Turbogenerator, umfasst einen Stator und einen Rotor mit wenigstens einem Rotorballen, wobei der Rotorballen gemäß einer der vorgenannten Ausgestaltungen oder einer beliebigen Kombination derselben ausgebildet ist. Mit der rotierenden elektrischen Maschine sind die oben mit Bezug auf den Rotorballen genannten Vorteile entsprechend verbunden.

Im Folgenden wird eine bevorzugte Ausführungsform des erfindungsgemäßen Rotorballens anhand der beigefügten schematischen Zeichnung erläutert.

Es zeigt:

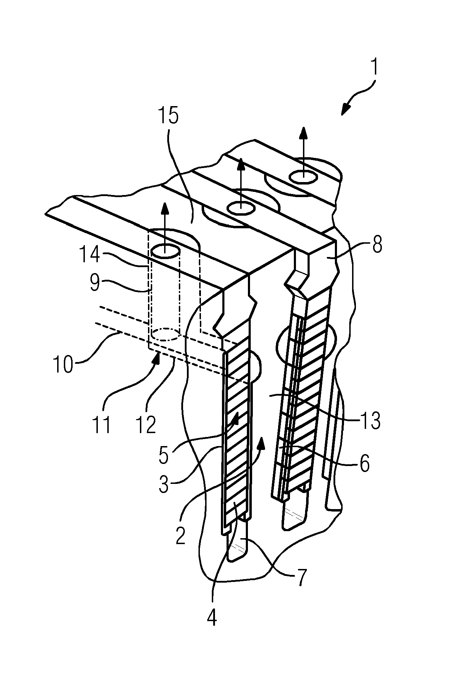

- Fig. 1: eine schematische und perspektivische Darstellung eines Ausschnitts eines Ausführungsbeispiels für einen erfindungsgemäßen Rotorballen.

Figur 1 zeigt eine schematische und perspektivische Darstellung eines Ausschnitts eines Ausführungsbeispiels für einen erfindungsgemäßen Rotorballen 1 für einen nicht weitergehender dargestellten Rotor einer rotierenden elektrischen Maschine.

Der Rotorballen 1 umfasst mehrere umfangsverteilt angeordnete, axial verlaufende Rotorzähne 2, zwischen denen axial verlaufende Aufnahmenuten 3 zur Aufnahme von jeweils einem aus mehreren Teilleitern 4 gebildeten Leiterabschnitt 5 einer nicht weitergehender dargestellten Rotorwicklung des Rotors angeordnet sind. Die Leiterabschnitte 5 sind geschnitten dargestellt. Sie setzten sich in Figur 1 rechts unter Ausbildung eines nicht gezeigten, zu kühlenden Rotorwickelkopfes des Rotors weiter fort, was aus Übersichtlichkeitsgründen nicht näher dargestellt ist. Jeder Leiterabschnitt 5 ist mit einer elektrischen Isolierung 6 umgeben, die auch zwischen den Teilleitern 4 angeordnet ist.

Jede Aufnahmenut 3 umfasst radial innen einen Nutgrundkanal 7, durch den ein Kühlfluid zum Kühlen des jeweilig in der Aufnahmenut 3 angeordneten Leiterabschnitts 5 geführt werden kann. Jede Aufnahmenut 3 ist radial außen mit jeweils einem Nutverschlusskeil 8 verschlossen. An jedem Nutverschlusskeil 8 ist wenigstens eine radiale Bohrung 9 angeordnet, durch die ein durch einen axialen Kühlkanal 10 an dem jeweiligen Leiterabschnitt 5 geführtes Kühlfluid radial nach außen geleitet werden kann.

An jeder radialen Seitenwand jedes Rotorzahns 2 ist wenigstens eine Nut 11 angeordnet, wobei die Nut 11 an einer radial äußeren Wandhälfte der radialen Seitenwand des jeweiligen Rotorzahns 2 angeordnet ist. Die Nut 11 umfasst einen geradlinig verlaufenden axialen Nutabschnitt 12, der sich von einer Stirnseite 13 des Rotorballens 1 axial über einen vorgegebenen Teilabschnitt des Rotorballens 1 erstreckt. Des Weiteren umfasst die Nut 11 einen kommunizierend mit dem axialen Nutabschnitt 12 verbundenen, geradlinig verlaufenden radialen Nutabschnitt 14, der sich von dem axialen Nutabschnitt 12 radial zu einer Außenmantelfläche 15 des Rotorballens 1 erstreckt. Der vorgegebene Teilabschnitt des Rotorballens 1 ist deutlich kürzer als ein Viertel einer axialen Länge des Rotorballens 1 ausgebildet. Die Nutabschnitte 12 und 14 sind im Querschnitt kreissegmentförmig ausgebildet.

Obwohl die Erfindung im Detail durch das bevorzugte Ausführungsbeispiel näher illustriert und beschrieben wurde, so ist die Erfindung nicht durch das offenbarte Beispiel eingeschränkt und andere Variationen können vom Fachmann hieraus abgeleitet werden, ohne den Schutzumfang der Erfindung zu verlassen.

## Patentansprüche

1. Rotorballen (1) für einen Rotor einer rotierenden elektrischen Maschine,
aufweisend mehrere umfangsverteilt angeordnete, axial verlaufende Rotorzähne (2), zwischen denen axial verlaufende Aufnahmenuten (3) zur Aufnahme von jeweils einem Leiterabschnitt (5) einer Rotorwicklung des Rotors angeordnet sind, wobei an wenigstens einer radialen Seitenwand von wenigstens einem Rotorzahn (2) wenigstens eine Nut (11) angeordnet ist, die wenigstens einen axialen Nutabschnitt (12), der sich von einer Stirnseite (13) des Rotorballens (1) zumindest teilweise axial über einen vorgegebenen Teilabschnitt des Rotorballens (1) erstreckt, und
wenigstens einen kommunizierend mit dem axialen Nutabschnitt (12) verbundenen radialen Nutabschnitt (14), der sich von dem axialen Nutabschnitt (12) zumindest teilweise radial zu einer Außenmantelfläche (15) des Rotorballens (1) erstreckt, aufweist.

2. Rotorballen (1) gemäß Anspruch 1,
wobei der vorgegebene Teilabschnitt des Rotorballens (1) kürzer als eine Hälfte einer axialen Länge des Rotorballens (1) ausgebildet ist.

3. Rotorballen (1) gemäß Anspruch 1 oder 2,
wobei die Nut (11) an einer radial äußeren Wandhälfte der radialen Seitenwand des Rotorzahns (2) angeordnet ist.

4. Rotorballen (1) gemäß einem der Ansprüche 1 bis 3, wobei die Nut (11) im Querschnitt zumindest teilweise kreissegmentförmig ausgebildet ist.

5. Rotorballen (1) gemäß einem der Ansprüche 1 bis 4, wobei wenigstens ein Nutabschnitt (12, 14) geradlinig verläuft.

6. Rotierende elektrische Maschine,
insbesondere Turbogenerator,
aufweisend einen Stator und einen Rotor mit wenigstens einem Rotorballen (1),
wobei der Rotorballen (1) gemäß einem der Ansprüche 1 bis 5 ausgebildet ist.
